# EUROPEAN PATENT SPECIFICATION

(11) **EP 1 179 506 B1**
(45) Date of publication and mention of the grant of the patent: **10.03.2004**
(21) Application number: 01500213.2
(22) Date of filing: 09.08.2001
(51) Int. Cl.: C01F 11/18, C01D 3/04

(54) **Procedure for industrial use of mussel shells**
Verfahren zur industriellen Verwendung von Muschelschalen
Procédé de l'utilisation industrielle des coquilles de moules

(30) Priority: 09.08.2000 ES 200002042
(43) Date of publication of application: 13.02.2002
(73) Proprietor: Jealsa Rianxeira, S.A., A Coruna (ES)
(72) Inventor: Rodriguez Castro, Antonio M., 15210 Noya (ES)
(74) Representative: Davila Baz, Angel

(56) References cited:
- WO-A-96/32354
- WO-A-98/13298
- WO-A-99/12851
- DATABASE WPI Section Ch, Week 199906 Derwent Publications Ltd., London, GB; Class E33, AN 1999-061171 XP002186223 & CN 1 193 603 A (JIN M), 23 September 1998 (1998-09-23)

## Description

This invention concerns a procedure for the processing of mussel shells in order to make use of their calcium content industrially.

It is known that the mussel canning industry produces annually a large volume of shells of this mollusc which are usually either disposed of as waste products or used as filler in certain industrial applications.

It would, therefore, be of great value to industry to be able to recover the calcium content of these shells in the form of calcium carbonate, a product considered to be both valuable and marketable.

A procedure has now been found which can be used to transform said mussel shell waste into calcium carbonate and then purify it using the carbon dioxide generated by the base material itself.

Unless shown otherwise, the applicant body is unaware of any published material in the state of the art relevant to the object of the present invention. Nevertheless, in the state of the art, the technique is known for the industrial purification of calcium carbonate by its dissolution in acid and subsequent precipitation thereof using carbon dioxide in an alkaline atmosphere. Industrially, this gas is obtained by purifying combustion gases which contain carbon dioxide and water, in addition to nitrogen and sulphur. oxides and carbon monoxide.

The present invention, therefore, describes a procedure for the industrial application of mussel shells to obtain calcium carbonate characterised in that it comprises the following stages:
(a) washing the shells with water to remove impurities, especially chlorides;
(b) coarsely grinding the washed shells to facilitate the subsequent removal of organic matter mainly consisting of remains of mussel flesh, algae, parasites, raft rope, stem anchoring the animal to the shell and others;
(c) removing organic matter by heating the shells to a high temperature for the time required to complete this stage;
(d) retrieving the ground powder so treated, consisting of calcium carbonate with a purity of 95% and grey in colour;
(e) optionally further grinding the resulting powder;
(f) dissolving said grey powder in hydrochloric acid to obtain a solution of calcium chloride, a stream of carbon dioxide gas and insoluble residue;
(g) filtering the solution to remove the insoluble residue and adjusting its pH to clearly alkaline values, in order to precipitate out the magnesium as hydroxide, which is separated by filtration;
(h) adjusting the solution pH to 13-14 to transform it into a white suspension of calcium hydroxide over which the stream of carbon dioxide produced in the acid digestion in stage (f) is recirculated to start the reaction for obtaining insoluble calcium carbonate;
(i) after the reaction has concluded, filtering out the calcium carbonate, which now has a purity of 99.9% and is white in colour, and proceeding to wash several times to remove the soluble sodium hydroxide residue; and
(j) retrieving sodium chloride from the reaction water by neutralizing with hydrochloric acid and then evaporating off the water.

An essential characteristic of the procedure of the present invention lies in the recirculation of the carbon dioxide produced by dissolving in acid a sample of the base material, which is used to precipitate out the calcium hydroxide obtained from a previous digestion, after filtration and alkalinisation of the reaction medium.

All this results in an improved economic feasibility of the procedure of the invention since it is the base material itself that produces the reagent required, while suppressing the emission of carbon dioxide into the atmosphere.

The object of the invention can be better understood by means of the following example offered by way of illustration and not restrictively regarding the scope of the invention.

### Example

The procedure of the invention was carried out on a laboratory scale in the following manner:

A batch of mussel shells was taken and first cleaned to remove all unwanted substances present thereon. To this end, the shells were washed in running water to remove the highly soluble chlorides.

The shells so washed were coarsely ground to facilitate the subsequent removal of organic matter by calcination. Grinding was carried out to obtain fragments of 2-4 mm in size.

Next, the resulting solid material was calcinated at 550ºC for 1.5 - 2 hours in order to remove substances such as remains of mussel flesh, stem anchoring the animal to shell, algae, raft rope, parasites, etc. When this stage is performed in industry, suitable filters will be necessary to prevent emission of the gases produced into the atmosphere.

After the organic matter has been removed, the ground material so treated is recovered and optionally subjected to finer grinding depending on the final product desired. This product consists of calcium carbonate with a purity of approximately 90-95% and grey in colour; the finer the particle the lighter the colour. The purification process of this material is then carried out to obtain white calcium carbonate with a purity of at least 99%. For this purification process it is not necessary to carry out the second grinding process mentioned above.

For the purification process, 281 g of calcinated mussel shell are placed in a 5-litre gas bag and suspended in a small amount of water. The bag is placed on a magnetic agitator and coupled to it are a valve on its side, through which the gas can escape from the bag, and a pressure-compensating funnel which shall serve to introduce the spirits of salts (solution of hydrogen chloride in water, 20% by weight) which is used to digest the shell and produce carbon dioxide. The gas so produced is led into a washing flask with water in the bottom through which the gas stream is bubbled in order to dissolve possible HCI impurities. When the water leaves the washing flask it passes through a rubber tube to a gas diffuser immersed in a calcium hydroxide suspension, to achieve an almost quantitative reaction.

Treating the calcinated shell with HCl gives rise to a solution of calcium and magnesium chloride and some insoluble matter. The mixture is brought to a pH of 10.5-11 at which the magnesium precipitates out as hydroxide. The mixture is then filtered to remove the shell fraction that did not react and the magnesium hydroxide produced by alkalinisation with sodium hydroxide.

Finally, the main solution is brought to pH 13-14 to obtain a white suspension which contains the calcium hydroxide in an aqueous medium.

After finalising the carbonation reaction, the calcium carbonate is filtered off and the remaining water is neutralized (to pH 7) with HCI. Sodium chloride (common salt) is obtained by evaporating off the water.

## Claims

1. Procedure for the industrial use of mussel shells to obtain calcium carbonate **characterised by** the following stages:
(k) washing the shells with water to remove impurities, especially chlorides;
(l) coarsely grinding the washed shells to facilitate the subsequent removal of organic matter mainly consisting of remains of mussel flesh, algae, parasites, raft rope, stem anchoring the animal to the shell and others;
(m) removing organic matter by heating the shells to a high temperature for the time required to complete this stage;
(n) retrieving the ground powder so treated, consisting of calcium carbonate with a purity of 95% and grey in colour;
(o) optionally further grinding the resulting powder;
(p) dissolving said grey powder in hydrochloric acid to obtain a solution of calcium chloride, a stream of carbon dioxide gas and insoluble residue;
(q) filtering the solution to remove the insoluble residue and adjusting its pH to clearly alkaline values, in order to precipitate out the magnesium as hydroxide, which is separated by filtration;
(r) adjusting the solution pH to 13-14 to transform it into a white suspension of calcium hydroxide over which the stream of carbon dioxide produced in the acid digestion in stage. (f) is recirculated to start the reaction for obtaining insoluble calcium carbonate;
(s) after the reaction has concluded, filtering out the calcium carbonate, which now has a purity of 99.9% and is white in colour, and proceeding to wash several times to remove the soluble sodium hydroxide residue; and
(t) retrieving sodium chloride from the reaction water by neutralizing with hydrochloric acid and then evaporating off the water.

2. Procedure according to claim 1, **characterised in that** the grinding process of stage (b) is carried out to obtain a particle size of 2 to 4 mm approximately.

3. Procedure according to claim 1, **characterised in that** the heating process of stage (c) is carried out at a temperature of about 550°C for approximately 1 to 1.5 hours.

4. Procedure according to claim 1, **characterised in that** in stage (g) the pH is adjusted to a value of about 10.5 -11 with sodium hydroxide.

## Patentansprüche

1. Verfahren für die industrielle Verwendung von Muschelschalen, um Kalziumcarbonat zu erhalten, **gekennzeichnet durch** die folgenden Schritte:
(k) Waschen der Schalen mit Wasser, um Verunreinigungen, insbesondere Chloride, zu entfernen;
(l) grobes Zermahlen der gewaschenen Schalen, um die nachfolgende Entfernung von organischer Substanz zu erleichtern, die hauptsächlich aus den Resten von Muschelfleisch, Algen, Parasiten, Floßseil, dem Stiel, der das Tier an der Schale verankert, und anderem besteht;
(m) Entfernen der organischen Substanz **durch** Erhitzen der Schalen auf eine hohe Temperatur für die Zeitdauer, die benötigt wird, um diesen Schritt zu vollenden;
(n) Wiedergewinnen des so behandelten gemahlenen Pulvers, das aus Kalziumcarbonat mit einer Reinheit von 95% und grauer Farbe besteht;
(o) wahlweise weiteres Mahlen des erhaltenen Pulvers;
(p) Auflösen des grauen Pulvers in Salzsäure, um eine Lösung von Kalziumchlorid, einen Strom von Kohlenstoffdioxidgas und unlöslichen Rückstand zu erhalten;
(q) Filtrieren der Lösung, um den unlöslichen Rückstand zu entfernen, und Einstellen ihres pH-Werts auf deutlich alkalische Werte, um das Magnesium als Hydroxid auszufällen, das **durch** Filtration abgetrennt wird;
(r) Einstellen des pH-Werts der Lösung auf 13-14 um sie in eine weiße Suspension von Kalziumhydroxid umzuwandeln, über welche der bei der Säure-Digerierung in Schritt (f) erzeugte Strom von Kohlenstoffdioxid zurückgeführt wird, um die Reaktion zum Bilden von unlöslichem Kalziumcarbonat zu beginnen;
(s) nachdem die Reaktion geendet hat, Abfiltrieren des Kalziumcarbonats, das nun eine Reinheit von 99,9% und weiße Farbe hat, und anschließenden mehrfaches Waschen, um den löslichen Natriumhydroxidrest zu entfernen; und
(t) Zurückgewinnen von Natriumchlorid aus dem Reaktionswasser **durch** Neutralisieren mit Salzsäure und anschließendes Abdampfen des Wassers.

2. Verfahren gemäß Anspruch 1, **dadurch gekennzeichnet, dass** der Mahlvorgang von Schritt (1) ausgeführt wird, um eine Partikelgröße von ungefähr 2 bis 4 mm zu erhalten.

3. Verfahren gemäß Anspruch 1, **dadurch gekennzeichnet, dass** der Erhitzungsvorgang von Schritt (m) bei einer Temperatur von ungefähr 550°C ungefähr 1 bis 1,5 Stunden lang ausgeführt wird.

4. Verfahren gemäß Anspruch 1, **dadurch gekennzeichnet, dass** in Schritt (q) der pH-Wert mit Natriumhydroxid auf einen Wert von ungefährt 10,5-11 eingestellt wird.

## Revendications

1. Procédé d'utilisation industrielle de coquilles de moules pour l'obtention de carbonate de calcium, **caractérisé en ce qu'**il comprend les étapes suivantes de:
(k) lavage des coquilles avec de l'eau afin d'éliminer les impuretés, en particulier les chlorures ;
(l) broyage grossier des coquilles lavées pour faciliter l'élimination ultérieure de la matière organique constituée principalement de restes de chair de moule, d'algues, de parasites, de corde flottante, du muscle fixant l'animal à la coquille et autres ;
(m) élimination de la matière organique par chauffage des coquilles jusqu'à une température élevée pendant un laps de temps nécessaire pour achever cette étape;
(n) récupération de la poudre broyée ainsi traitée constituée de carbonate de calcium de 95% de pureté et de couleur grise ;
(o) éventuellement broyage ultérieur de la poudre résultante ;
(p) dissolution de la poudre grise dans de l'acide chlorhydrique afin d'obtenir une solution de chlorure de calcium, un courant de gaz de dioxyde de carbone et un résidu insoluble ;
(q) filtration de la solution afin d'éliminer le résidu insoluble et ajustement de son pH jusqu'à des valeurs alcalines clairement définies pour éliminer par précipitation le magnésium sous forme. d'hydroxyde qui est séparé par filtration ;
(r) ajustement du pH de la solution à 13-14 pour la transformer en une suspension blanche d'hydroxyde de calcium sur laquelle le courant de dioxyde de carbone produit lors de la digestion acide de l'étape (f) est remis à circuler pour faire débuter la réaction d'obtention de carbonate de calcium insoluble.
(s) séparation par filtration du carbonate de calcium, après l'achèvement de la réaction, présentant maintenant une pureté de 99,9% et étant de couleur blanche et recours plusieurs fois au lavage afin d'éliminer le résidu d'hydroxyde de sodium soluble ; et
(t) extraction du chlorure de sodium de l'eau réactionnelle par neutralisation avec de l'acide chlorhydrique et puis élimination de l'eau par évaporation.

2. Procédé selon la revendication 1, **caractérisé en ce que** le procédé de broyage de l'étape (b) est effectué pour obtenir une taille des particules de 2 à 4 mm environ.

3. Procédé selon la revendication 1, **caractérisé en ce que** le procédé de chauffage de l'étape (c) est effectué à une température d'environ 550°C pendant un laps de temps d'environ 1 à 1,5 heure.

4. Procédé selon la revendication 1, **caractérisé en ce que** lors de l'étape (g), le pH est ajusté à une valeur d'environ 10,5-11 avec de l'hydroxyde de sodium.
